# EUROPÄISCHE PATENTSCHRIFT

(11) **EP 4 204 699 B1**
(45) Veröffentlichungstag und Bekanntmachung des Hinweises auf die Patenterteilung: **24.07.2024**
(21) Anmeldenummer: 21777620.2
(22) Anmeldetag: 30.08.2021
(51) Int. Cl.: F16C 9/04, F16C 17/24, F16C 41/00

(54) **LAGERELEMENT MIT EINEM SENSOR UND EINER TELEMETRIEVORRICHTUNG**
BEARING ELEMENT WITH A SENSOR AND A TELEMETRIC DEVICE
ELEMENT DE PALIER DOTÉ D'UN CAPTEUR ET D'UN DISPOSITIF DE TELEMETRIE

(30) Priorität: 31.08.2020 AT 507382020
(43) Veröffentlichungstag der Anmeldung: 05.07.2023
(73) Patentinhaber: Miba Gleitlager Austria GmbH, 4663 Laakirchen (AT)
(72) Erfinder: HAGER, Gunther, 4563 Micheldorf (AT); SCHALLMEINER, Stefan, 4662 Steyrermühl (AT)
(74) Vertreter: Burger, Hannes
(86) Internationale Anmeldenummer: PCT/AT2021/060302
(87) Internationale Veröffentlichungsnummer: WO 2022/040716

(56) Entgegenhaltungen:
- AT-A4- 521 598
- DE-A1- 102015 221 276
- DE-A1- 102017 210 783
- US-A1- 2019 195 284

## Beschreibung

Die Erfindung betrifft ein Lagerelement zur Anordnung in einer Lageraufnahme einer Lageranordnung umfassend einen als Gleitlagerelement ausgebildeten Lagerelementkörper und einen Sensor zur Messung zumindest eines Betriebsparameters des Lagerelements sowie eine Telemetrie-Vorrichtung, wobei der Lagerelementkörper mit der Telemetrie-Vorrichtung mit einem Verbindungselement verbunden ist, wobei die Telemetrie-Vorrichtung mit dem Sensor mit elektrischen Leitern leitungsgebunden verbunden ist.

Weiter betrifft die Erfindung eine Lageranordnung mit einer Lageraufnahme, und mit zumindest einem Lagerelement, das in der Lageraufnahme angeordnet ist.

In den letzten Jahren erlangte die sensorische Überwachung von Gleitlagern eine immer grö-ßere Bedeutung. Neben der indirekten Messung von Gleitlagerparametern, beispielsweise aufgrund der Temperaturerhöhung der Lageraufnahme, steht zunehmend auch die Anordnung von Sensoren im oder in unmittelbarer Nähe zum Schmierspalt im Vordergrund der Entwicklung. Problematisch sind dabei nicht nur die Umweltbedingungen für die Sensorik, sondern auch die Gleitlagern eigenen mechanischen Ausprägungen, wie beispielsweise das Vorhandensein von rotierenden Bauteilen. Beispielhaft sei auf die AT 408 900 B verwiesen, aus der eine Vorrichtung zum Überwachen eines Gleitlagers, das eine in einem Stützkörper eingespannte Lagerschale aufweist, bekannt ist, mit wenigstens einem im Lagerschalenbereich angeordneten Messfühler für temperaturabhängige Messsignale und mit einer Auswerteschaltung für die Messsignale.

In diesem Zusammenhang ist es aus der AT 521 598 A4 zur Verbesserung der Kompaktheit derartiger Gleitlageranordnungen bekannt, dass an einer radialen Gleitlagerelementstirnfläche eine Vertiefung ausgebildet ist, in der eine Telemetrie-Vorrichtung angeordnet ist, oder dass die Telemetrie-Vorrichtung an oder zumindest teilweise in der Lageraufnahme angeordnet ist.

Die DE 10 2015 221 276 A1 beschreibt ein Wälzlager, umfassend einen Innenring, einen Au-ßenring mit einer Außenfläche in Form eines Kugelabschnitts, Wälzkörper zwischen dem Innenring und dem Außenring, eine Codierscheibe, die drehfest mit dem Innenring verbunden ist, ein Sensorelement, das dazu vorgesehen ist, eine Drehung der Codierscheibe zu erfassen, ein Stützelement, umfassend eine Innenfläche in Form eines Kugelabschnitts, wobei die Innenfläche dazu vorgesehen ist, mit der Außenfläche des Außenringes in Gleitkontakt zu stehen, wobei das Stützelement dazu vorgesehen ist, das Sensorelement in Bezug auf die Codierscheibe in einer Position zu halten, in der das Sensorelement eine Drehung der Codierscheibe erfassen kann, wobei das Sensorelement einen Transponder umfasst, der dazu bestimmt ist, drahtlos mit einem Detektor zu kommunizieren.

Aus der DE 10 2017 210 783 A1 ist ein Gleitlager, insbesondere einer Brennkraftmaschine, bekannt, mit einer Lagerschale, die an einem Lagerbock angeordnet und mit einer gedruckten Leiterbahn zur Verschleißmessung und/oder zur Temperaturmessung ausgestattet ist, wobei der Leiterbahn an der Lagerschale und dem Lagerbock jeweils ein Kontakt zugeordnet ist und zwischen den Kontakten ein Dielektrikum mit bekannter Dielektrizitätskonstante angeordnet ist.

Die US 2019/195284 A1 beschreibt ein Gleitlager umfassend einen Lagerhauptkörper, einen Sensorhauptkörper, der in der Aussparung untergebracht ist, und eine Sensorverdrahtung, deren eines Ende mit dem Sensorhauptkörper verbunden ist und bei der ein Teil davon in einer Längsrichtung in der Nut untergebracht ist.

Der vorliegenden Erfindung liegt die Aufgabe zu Grunde, ein derartiges, mit einem Sensor versehenes Lagerelement weiter zu verbessern.

Die Aufgabe der Erfindung wird bei dem eingangs genannten Lagerelement dadurch gelöst, dass das Verbindungselement streifenförmig oder bügelförmig ausgebildet ist und dass die elektrischen Leiter auf dem Verbindungselement angeordnet sind.

Weiter wird die Aufgabe der Erfindung mit der eingangs genannten Lagenanordnung gelöst, die das erfindungsgemäße Lagerelement aufweist.

Von Vorteil ist dabei, dass durch die Verbindung des Lagerelementkörpers mit der Telemetrie-Vorrichtung ein Gesamtsystem zur Verfügung gestellt werden kann, das wesentliche Teile zur Überwachung von Lagern bereits in integriertem Zustand aufweist, sodass auf Anwenderseite des Lagerelementes nur mehr minimale Anpassungen bzw. geringfügige Montagearbeiten erforderlich sind. Zudem kann damit dieses System vor Auslieferung herstellerseitig getestet werden und bleibt dieses getestete System auch bei Auslieferung in dieser getesteten Konfiguration erhalten.

Die Telemetrie-Vorrichtung ist mit einem Verbindungselement mit dem Lagerelementkörper verbunden. Es ist damit einfacher möglich, unterschiedliche Werkstoffe im Lagerelement und in der Telemetrie-Vorrichtung bei der Herstellung der Verbindung zu berücksichtigen.

Dabei ist vorgesehen, dass das Verbindungselement streifenförmig oder bügelförmig ausgebildet ist. Durch diese Ausbildung kann die Telemetrie-Vorrichtung weiter entfernt von den sich drehenden Teilen einer Lagerung, wie insbesondere einer Welle, angeordnet werden. Dies erlaubt einen besseren Schutz der Bestandteile der Telemetrie-Vorrichtung bzw. auch eine einfachere, ungestörtere Datenübertragung von der Telemetrie-Vorrichtung zu einem Empfänger.

Es ist weiter vorgesehen sein, dass der Sensor mit elektrischen Leitern mit dem der Telemetrie-Vorrichtung verbunden ist. Die Messwert-Übertragung vom Sensor an die Telemetrie-Vorrichtung kann damit störungssicherer - im Vergleich zu kontaktlosen Übertragung - ausgebildet werden.

Die elektrischen Leiter sind auf dem Verbindungselement angeordnet, da damit der Vorfertigungsgrad des Lagerelementes für den Einbau in eine Lagerung weiter verbessert werden kann.

Zu besseren Fixierung der Telemetrie-vorrichtung kann dabei nach einer weiteren Ausführungsvariante der Erfindung vorgesehen sein, dass das bügelförmige Verbindungselement u-förmig mit zwei Schenkeln ausgebildet ist, wobei beide Schenkel mit dem Lagerelementkörper verbunden sind. Es ist damit auch eine bessere Fixierung des Lagerelementes in einer Lageraufnahme erreichbar, indem sich die Lageraufnahme durch den Durchbruch, der aus dem bügelförmigen Verbindungselement und dem Lagerelementkörper gebildet wird, hindurch erstreckt, und insbesondere an dem Verbindungselement anliegt.

Es kann nach einer anderen Ausführungsvariante der Erfindung auch vorgesehen werden, dass in dem Gesamtsystem zusätzlich eine Energieversorgungsvorrichtung vorgesehen ist, die elektrische leitend mit der Telemetrie-Vorrichtung und dem Sensor verbunden ist, womit die Autarkie des Messsystems verbessert werden kann.

Dabei kann gemäß eine Ausführungsvariante dazu vorgesehen sein, dass die elektrische leitende Verbindung der Energieversorgungsvorrichtung mit dem Sensor über weitere elektrische Leiter ausgebildet ist, wobei die weiteren elektrischen Leiter auf dem Verbindungselement angeordnet sind, womit eine weitere Erhöhung des Vorfertigungsgrads des Lagerelementes für den Einbau in eine Lagerung erreicht werden kann.

Zur weiteren Erhöhung der Funktionalität dieses Lagerelementes nach der Erfindung kann gemäß einer weiteren Ausführungsvariante vorgesehen sein, dass das Verbindungselement ein Axialgleitlager bildet, sodass das Lagerelement neben der Radiallagerfunktion auch die Axiallagerfunktion erfüllen kann.

Von Vorteil kann gemäß einer Ausführungsvariante dazu sein, wenn das Verbindungselement zur Ausbildung des Axialgleitlagers mit einem Gleitlagerwerkstoff beschichtet ist, da damit einerseits die Anbindung des Verbindungselementes an den Lagerelementkörper vereinfacht werden kann. Gleichzeitig kann damit aber auch die Axiallagerfunktion verbessert werden. Mit anderen Worten ausgedrückt ist damit kein Kompromiss hinsichtlich der Werkstoffwahl für das Verbindungselement erforderlich, sodass das Verbindungselement neben einer besseren Strukturfestigkeit auch eine verbesserte Gleitfähigkeit aufweist.

Erfindungsgemäß ist der Lagerelementkörper als Gleitlagerelement ausgebildet, da damit die Messwert-Erfassung einfacher durchgeführt werden kann.

Gemäß einer anderen Ausführungsvariante der Erfindung kann vorgesehen sein, dass der Lagerelementkörper eine Ausnehmung aufweist, und dass der Sensor in dieser Ausnehmung angeordnet ist, womit der Sensor besser vor den drehenden Teilen einer Lagerung geschützt werden kann.

Nach einer weiteren Ausführungsvariante der Erfindung kann vorgesehen sein, dass die Lageraufnahme als Pleuelstange ausgebildet ist, da darauf das Lagerelement mit der Telemetrie-Vorrichtung im Vergleich mit anderen Lageraufnahmen einfacher angeordnet werden kann.

Gemäß einer anderen Ausführungsvariante der Erfindung kann vorgesehen sein, dass die Lageraufnahme eine Vertiefung aufweist, in der das Verbindungselement des Lagerelementes zumindest teilweise aufgenommen ist. Durch diese Vertiefung kann die Einbaulage des Lagerelementes vorgegeben werden, sodass eine Falschpositionierung beim Einbau des Lagerelementes vermieden werden kann.

Zum besseren Verständnis der Erfindung wird diese anhand der nachfolgenden Figuren näher erläutert.

Es zeigen jeweils in vereinfachter, schematischer Darstellung:
- Fig. 1: eine Ausführungsvariante einer Lageranordnung in Ansicht von vorne;
- Fig. 2: eine Ausführungsvariante eines Lagerelements in Ansicht von vorne;
- Fig. 3: das Lagerelement nach Fig. 2 in Seitenansicht geschnitten entsprechend der Schnittlinie II-II in Fig. 2.

Einführend sei festgehalten, dass in den unterschiedlich beschriebenen Ausführungsformen gleiche Teile mit gleichen Bezugszeichen bzw. gleichen Bauteilbezeichnungen versehen werden, wobei die in der gesamten Beschreibung enthaltenen Offenbarungen sinngemäß auf gleiche Teile mit gleichen Bezugszeichen bzw. gleichen Bauteilbezeichnungen übertragen werden können. Auch sind die in der Beschreibung gewählten Lageangaben, wie z.B. oben, unten, seitlich usw. auf die unmittelbar beschriebene sowie dargestellte Figur bezogen und sind diese Lageangaben bei einer Lageänderung sinngemäß auf die neue Lage zu übertragen.

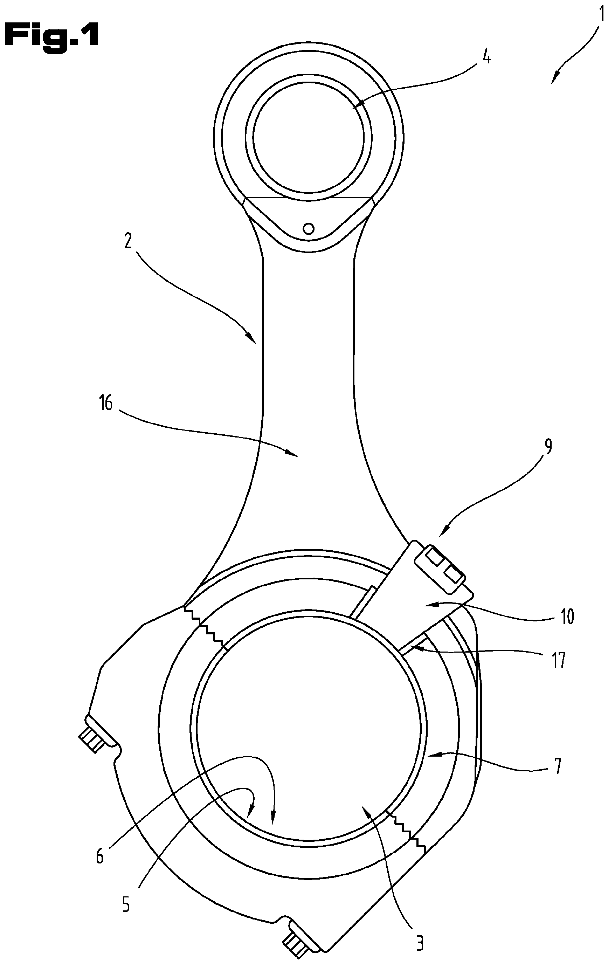

In Fig. 1 ist eine Lageranordnung 1 dargestellt. Bevorzugt ist die Lageranordnung als Pleuelstange 2 mit einem großen Pleuelauge 3 und einem kleinen Pleuelauge 3 ausgebildet. Es sei jedoch darauf hingewiesen, dass die Lageranordnung 1 auch anders ausgeführt sein kann. Beispielsweise kann die Lageranordnung 1 als Lagerdeckel, als Lagerstuhl, als Lagerbock, als Zahnrad, etc., ausgebildet sein.

Die Lageranordnung 1 umfasst zumindest ein Lagerelement 5, das einen Lagerelementkörper 6 aufweist. Der Lagerelementkörper 6 ist als Gleitlagerelement ausgebildet.

Es sei darauf hingewiesen, dass bei Vorhandensein mehrerer Lagerstellen, also beispielsweise das große und das kleine Pleuelauge 3, 4 bei der in Fig. 1 dargestellten Pleuelstange 2, es auch möglich ist, dass zumindest ein Lagerelement 5 jeder Lagerstelle oder mehrere der Lagerelemente 5 oder alle Lagerelemente 5 gleich ausgebildet sein können. Generell kann aber auch nur ein Lagerelement 5 erfindungsgemäß ausgebildet sein, also beispielsweise das in Fig. 1 im großen Pleuelauge 3 angeordnete Lagerelement 5.

Im in Fig. 1 dargestellten Ausführungsbeispiel sind zwei Gleitlagerelemente dargestellt, die die Form von sogenannten Halbschalen haben. Es besteht jedoch auch die Möglichkeit, dass das Gleitlagerelement als Gleitlagerbuchse ausgebildet ist. Zudem kann die mit den Gleitlagerelementen ausgestattete Gleitlagerung eine andere Teilung aufweisen, sodass also beispielsweise drei oder vier oder mehr als vier Gleitlagerelemente in der Gleitlagerung verbaut sein können. In sehr großen Gleitlagern, wie sie beispielsweise in Windenergieanlagen eingesetzt werden, können die Gleitlagerelemente beispielsweise auch als Gleitlagerpads ausgebildet sein, wobei in diesen Fällen deutlich mehr als vier Gleitlagerelemente, beispielsweise bis zu 40 Gleitlagerelemente, im Gleitlager vorhanden sein können. Eines oder mehrere dieser Gleitlagerelemente kann/können erfindungsgemäß ausgebildet sein.

Das zumindest eine Gleitlagerelement ist in einer Lageraufnahme 7 angeordnet, beispielsweise mittels einer Presspassung. Die Lageraufnahme 7 ist bei der in Fig. 1 dargestellten Ausführungsvariante der Erfindung durch die Pleuelstange 2 gebildet, insbesondere durch das große Pleuelauge 3.

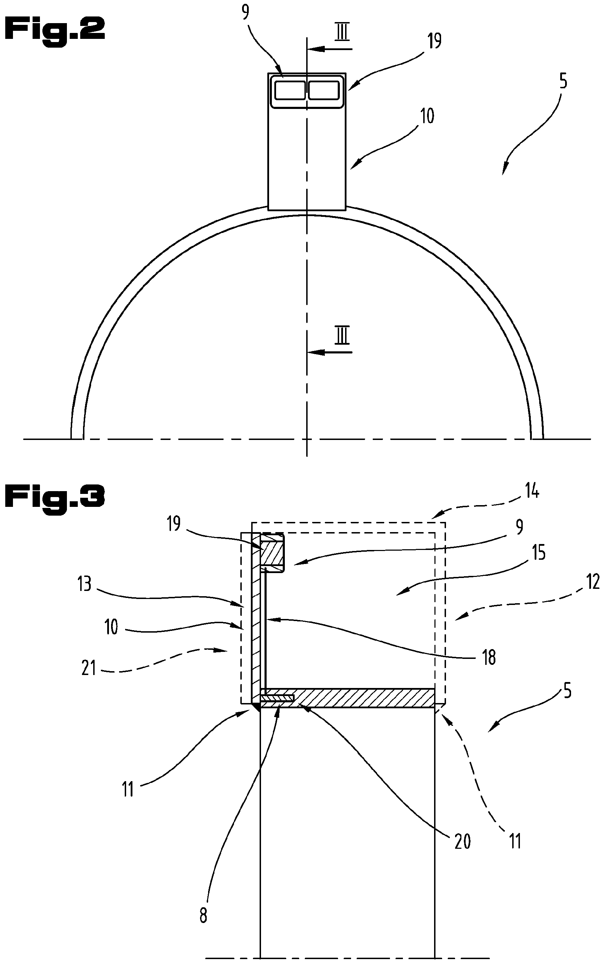

In den Fig. 2 und 3 ist ein Lagerelement 5 dargestellt, wie es beispielsweise in dem großen Pleuelauge 3 der Pleuelstange 2 eingesetzt ist. Das zumindest eine Lagerelement 5 umfasst zumindest einen Sensor 8, wie dies besser aus den Fig. 2 und 3 ersichtlich ist. Es können auch mehrere Sensoren 8 in dem Lagerelement 5 angeordnet sein.

Der Sensor 8 dient der Erfassung zumindest einer physikalischen Größe des Lagerelements 5. Beispielsweise kann der Sensor 8 ein Temperatursensor, ein Drucksensor, Dehnungssensor, etc. sein. Mithilfe des zumindest einen Sensors 8 kann ein Parameter des Lagerelements 5 im Betrieb erfasst werden. Anhand dieses Parameters kann z.B. auf den Zustand des zumindest einen Lagerelements 5 rückgeschlossen werden, da beispielsweise bei einer anormalen Temperaturerhöhung auf den Verschleiß der Gleitfläche des Lagerelements 5 bzw. das Versagen des Lagerelements 5 geschlossen werden kann. Es kann also mit dem Sensor 8 ein für den Betrieb des Lagerelements 5 wesentlicher Parameter erfasst werden.

Das Lagerelement 5 weist weiter eine Telemetrie-Vorrichtung 9 auf, mit der die Messwerte des Sensors 8 bzw. die erfassten Daten zu einem räumlich vom Lagerelement 5 getrennten Empfänger übertragen werden können. Dazu ist die Telemetrie-Vorrichtung 9 mit dem zumindest einen Sensor 8 verbunden. Die Telemetrie-Vorrichtung 9 kann die Messwerte entweder nur sammeln und weiterleiten oder auch auswerten und die aus der Auswertung gewonnen Daten weiterleiten.

Für die Verarbeitung der erfassen Parameter, d.h. der zugehörigen Daten, kann die Telemetrie-Vorrichtung 9 ein Datenverarbeitungselement aufweisen, das beabstandet zum Lagerelementkörper 6 angeordnet ist. Das Datenverarbeitungselement kann aber auch Teil einer nicht zum Lagerelement 5 gehörenden externen Auswerteeinrichtung sein. Für die Datenübertragung zu diesem zumindest externen Datenverarbeitungselement kann die Telemetrie-Vorrichtung 9 eine Datenübertragungseinrichtung aufweisen, die die Daten von dem zumindest einen Sensor 8 empfängt und an das zumindest eine Datenverarbeitungselement als Datenempfänger weiterleitet, insbesondere drahtlos. Für die drahtlose Datenübertragung können die bekannten Protokolle verwendet werden. Die drahtlose Datenübertragung kann beispielsweise mittel Bluetooth oder WLAN, LoWPAN, ZigBee ANT/ANT, etc., erfolgen.

Da derartige Systeme der Datenerfassung in Lagerelementen 5 und der drahtlosen Übertragung an eine dazu externe Stelle an sich bereits aus dem für Gleitlager einschlägigen Stand der Technik bekannt sind, sei zur Vermeidung von Wiederholungen zu weiteren Einzelheiten dazu auf diesen Stand der Technik verwiesen.

Es ist vorgesehen, dass die Telemetrie-Vorrichtung 9 mit dem Lagerelementkörper 6 verbunden ist. Die Verbindung ist fix, d.h. als feste Verbindung, ausgeführt. Dazu kann die Verbindung stoffschlüssig und/oder reibschlüssig ausgeführt sein. Gegebenenfalls kann die Verbindung zusätzlich auch formschlüssig ausgebildet sein. Bevorzugt ist die Verbindung nicht lösbar ausgebildet, d.h. dass die Verbindung nicht ohne Zerstörung gelöst werden kann. Es ist aber auch eine lösbare Verbindung möglich, beispielswiese über Schrauben.

Zur Verbindung kann die Telemetrie-Vorrichtung 9 direkt mit dem Lagerelementkörper 6 verbunden sein, beispielsweise stoffschlüssig, z.B. aufgeklebt sein oder damit verschweißt sein.

Die Telemetrie-Vorrichtung 9 ist jedoch nicht direkt mit dem Lagerelementkörper 6 verbunden, sondern über ein Verbindungselement 10. Dieses Verbindungselement 10 ist einerseits mit dem Lagerelementkörper 6 und andererseits mit der Telemetrie-Vorrichtung 9 verbunden. Die Verbindung kann jeweils stoffschlüssig erfolgen, beispielswiese durch das Anschweißen oder Anlöten oder Ankleben der Verbindungsvorrichtung 10 an den Lagerelementkörper 6. Dazu kann beispielsweise zwischen dem Verbindungselement 10 und dem Lagerelementkörper 6 eine Schweißnaht 11, z.B. eine Kehlnaht, ausgebildet werden. Ebenso kann die Telemetrie-Vorrichtung 9 stoffschlüssig mit dem Verbindungselement 10 verbunden sein, beispielsweise aufgeschweißt, aufgelötet oder aufgeklebt sein.

Durch die Verwendung des Verbindungselementes 10 kann eine zum Lagerelementkörper 6 beabstandete Anordnung der Telemetrie-Vorrichtung 9 erreicht werden.

Das Verbindungselement ist streifenförmig oder bügelförmig ausgebildet. So zeigt die Fig. 3 in vollen Linien ein streifenförmiges Verbindungselement 10, das aus einem Flachprofil gebildet ist.

Das Verbindungselement 10 besteht vorzugsweise aus einem metallischen Werkstoff. Es kann aber auch aus einem Kunststoff bestehen bzw. sind Verbundwerkstoffe ebenfalls einsetzbar.

Gemäß einer weiteren Ausführungsvariante dazu kann vorgesehen sein, das bügelförmige Verbindungselement 10 u-förmig mit zwei Schenkeln 12, 13 und einer dazwischen angeordneten Basis 14 ausgebildet ist, wobei beide Schenkel 12, 13 mit dem Lagerelementkörper 6 verbunden sind, insbesondere in deren Endbereich, wie dies in Fig. 3 teilweise strichliert dargestellt ist. Mit dieser Ausführungsvariante des Verbindungselements 10 kann eine Ausnehmung 15, die von den Schenkeln 12, 13 und der Basis 14 begrenzt ist, bereitgestellt werden, in der ein Teil der Lageraufnahme 7, also beispielsweise der Pleuelstange 2, aufgenommen werden kann, beispielsweise ein Bereich am Übergang vom großen Pleuelauge 3 auf einen Pleuelschaft 16 der Pleuelstange 2, wie dies aus Fig. 1 erkennbar ist.

Die Schenkel 12, 13 und die Basis 14 können bzw. das Verbindungselement 10 kann beispielsweise rechteckig ausgebildet sein. Die Schenkel 12, 13 können auch eine andere Form aufweisen, beispielsweise eine trapezförmige, wie dies aus Fig. 1 ersichtlich ist, bei der sich das Verbindungselement 10 bzw. die Schenkel 12, 13 in Richtung auf das große Pleuelauge 3 verjüngen. Es sind aber auch andere Formen möglich. Beispielsweise kann die Basis 14 mit einem Hinterschnitt ausgebildet sein, um zusätzlich eine formschlüssige Verbindung zu ermöglichen.

Nach einer Ausführungsvariante der Lageranordnung 1 kann vorgesehen sein, dass die Lageraufnahme 7 eine Vertiefung 17 aufweist, in der das Verbindungselement 10 des Lagerelementes 5 zumindest teilweise aufgenommen ist. Die Vertiefung 17 kann beispielsweise nutförmig ausgebildet sein, wie dies in Fig. 1 erkennbar ist. Dabei kann die nutförmige Vertiefung 17 zumindest annähernd in radialer Richtung verlaufen.

Die Vertiefung 17 kann in Umfangsrichtung des Lagerelementes 5 eine Breite aufweisen, die größer ist, als die Breite des darin aufgenommenen Verbindungselementes 10, oder die so groß ist, dass zwischen der Vertiefung 17 und dem Verbindungselement 10 ein Formschluss ausgebildet wird. Über die Vertiefung 17 kann die richtige Lage des Lagerelementes 5 relativ zur Lageraufnahme 7 definiert bzw. vorgegeben werden.

Die Verbindung zwischen dem zumindest einem Sensor 8 und der Telemetrie-Vorrichtung 9 ist leitungsgebunden mit elektrischen Leitern 18 ausgebildet. Prinzipiell können dazu Drähte verwendet werden. Diese können auf dem Verbindungselement 10 angeordnet werden, insbesondere damit verbunden werden. Es ist aber auch möglich, dass die elektrischen Leiter 18 durch Leiterbahnen bereitgestellt werden, die auf dem Verbindungselement 10 ausgebildet sind. Die Leiterbahnen können mit einer Schutzschicht abgedeckt sein, beispielsweise einem Schutzlack.

Nach einer weiteren Ausführungsvariante der Erfindung kann vorgesehen sein, dass die Lageranordnung 1 und/oder das Lagerelement 5 eine Energieerzeugungseinrichtung 19 (Fig. 2) aufweist. Mithilfe dieser Energieerzeugungseinrichtung 19 ist es möglich, den zumindest einen Sensor 8 und/oder die Datenübertragungseinrichtung und/oder die Datenverarbeitungseinrichtung der Telemetrie-Vorrichtung 9 autark mit elektrischer Energie zu versorgen, sodass also hierfür keine kabelgebundenen Anschlüsse der Lageranordnung 1 nach außen erforderlich sind.

Die zumindest eine Energieerzeugungseinrichtung 19 (es können auch mehr als eine Energieerzeugungseinrichtung 19 in der Lageranordnung 1 angeordnet sein) kann im bzw. auf dem zumindest einen Lagerelement 5 oder der Lageraufnahme 7 oder in der Telemetrie-Vorrichtung 9 angeordnet sein, beispielsweise in einer Ausnehmung.

Die Energieerzeugungseinrichtung 19 kann zumindest ein Piezoelement aufweisen. Je nach benötigter Energiemenge kann auch mehr als ein Piezoelement angeordnet sein, beispielsweise in Form eines Piezoelementpaketes.

Nur der Vollständigkeit halber sein darauf hingewiesen, dass auf die Wiedergabe der Funktionsweise eines Piezoelementes verzichtet wird, da diese ausführlich in der Literatur beschrieben ist und dem Fachmann auch bekannt ist.

Das zumindest eine Piezoelement kann unter einem Druck vorgespannt sein.

Das zumindest eine Piezoelement kann beispielsweis aus Blei-Zirkonat-Titanat (PZT) oder Bariumtitanat bestehen. Es sind aber auch andere piezoelektrische Werkstoffe einsetzbar.

Alternativ zu voranstehenden Ausführungen mit dem auf Druck vorgespannten Piezoelement oder zusätzlich dazu kann vorgesehen sein, dass die Energieerzeugungseinrichtung 19 der Sensor 8 selbst ist. Dazu kann der Sensor 8, der in diesem Fall insbesondere ein Drucksensor, vorzugsweise ein Indiziersensor bzw. Zylinderdruckindiziersensor, ist, mit einem Schmierspalt einer als Gleitlageranordnung ausgebildeten Lageranordnung 1 über eine Leitung hydrostatisch verbunden sein. Über diese Leitung kann der Sensor 8 mit dem Schmierspaltdruck beaufschlagt werden, sodass also damit der Druck des Schmiermittels im Schmierspalt gemessen werden kann.

In diesem Fall kann der Sensor 8 ein piezoaktives bzw. piezoelektrisches Element sein mit dem auch elektrische Energie erzeugt werden kann, gegebenenfalls nicht nur durch zeitlich- und/oder richtungsveränderliche Beschleunigungen relativ zum Sensor 8, sondern gegebenenfalls auch aufgrund von Druckwechselbeaufschlagungen.

Alternativ oder zusätzlich dazu kann vorgesehen sein, dass der Sensor 8 im Schmierspalt 14 der Gleitlageranordnung angeordnet wird, beispielsweise als Teil der Gleitschicht des Gleitlagerelementes. Auch damit ist wie bei der voranstehend genannten Ausführungsvariante der Gleitlageranordnung mit der Leitung zum Schmierspalt der Sensor 8 mit dem Schmiermitteldruck im Schmierspalt der Gleitlageranordnung beaufschlagbar.

Der Sensor 8 kann in einer Ausnehmung im Lagerelementkörper 6 angeordnet sein. Es kann auch vorgesehen sein, dass der Sensor 8 in eine radial innerste Schicht des Gleitlagerelementes eingebettet oder auf diesem angeordnet ist, beispielsweise in einer Vertiefung in dieser Schicht.

Die Energieerzeugungsvorrichtung 19 kann elektrisch leitend mit der Telemetrie-Vorrichtung 9 über elektrische Leitungen (z.B. Kabel) verbunden sein. Dabei ist es auch möglich, dass die elektrischen Leitungen auf dem Verbindungselement 10 angeordnet sind. Weiter können diese elektrischen Leitungen auch als Leiterbahnen ausgeführt sein.

Der Vollständigkeit halber sei dazu angemerkt, dass das Gleitlagerelement ein sogenanntes Mehrschichtgleitlager ist und zumindest eine Gleitschicht (auf der sich das zu lagernde Bauteil, beispielsweise eine Welle, abstützt bzw. darauf abgleitet) und eine Stützschicht aufweist. Zwischen diesen können weitere Schichten, wie beispielsweise eine Lagermetallschicht und/oder eine Bindeschicht und/oder eine Diffusionssperrschicht, etc. angeordnet sein. Die einzelnen Schichten können aus den hierfür aus dem Stand der Technik bekannten Werkstoffen gebildet sein.

Es kann auch vorgesehen sein, dass der Sensor 8 in einer unterhalb der Gleitschicht angeordneten Schicht angeordnet ist und von der Gleitschicht über eine elektrisch isolierende Schicht getrennt ist.

Es ist mit der Lageranordnung 1 möglich, ein Lagerelement 5 in einer Lageraufnahme 7 der Lageranordnung 1 mit zumindest einem Sensor 8 zu überwachen, wobei mit dem Sensor 8 ein Messwert erfasst wird und dieser Messwert an die Datenübertragungseinrichtung der Telemetrie-Vorrichtung 9 zur, insbesondere drahtlosen, Datenübertragung an einen Empfänger der Daten weitergeleitet wird, und wobei die elektrische Energie für den Sensor 9 und/oder die Datenübertragungseinrichtung durch die Bewegung des Lagerelementes 5 oder Lageranordnung 1 im Betrieb erzeugt wird.

Es kann mit der Erfindung ein Gleitlagerelement zu Verfügung gestellt werden, das eine unabhängige Systemeinheit zur Messung von physikalischen Größen wie Druck, Temperatur, Dehnung an/in Lagerelement 5 bildet. Das Gesamtsystem (der zumindest eine Sensor 8, die elektrischen Leitungen (Leiter 18), die Telemetrie-Vorrichtung 9, gegebenenfalls die Energieerzeugungsvorrichtung 19) ist mit dem Lagerelementkörper 6 fest verbunden bzw. bildet dieses Gesamtsystem mit dem Lagerelementkörper 6 und gegebenenfalls weiteren Teilen (wie z.B. Zapfen, Pleuel) eine funktionelle Einheit.

Nur der Vollständigkeit halber sei angemerkt, dass die einzelnen Bestandteile der Telemetrie-Vorrichtung 9, wie z.B. die Datenübertragungseinrichtung, eine Energieerzeugungseinrichtung, ein Mikroprozessor, ein Analog-Digital-Wandler, etc. einzeln auf dem Verbindungselement 10 angeordnet sein können. Gegebenenfalls können sie zu Baugruppen zusammengefasst werden. Für einen besseren Schutz können zumindest einzelne Bestandteile der Telemetrie-Vorrichtung 9 in einem Gehäuse angeordnet sein, wobei in diesem Fall vorgesehen sein kann, dass das Verbindungselement 10 einen Teil des Gehäuses ausbildet. Das Gehäuse kann eine dem Zweck entsprechende Form aufweisen.

Nach einer weiteren Ausführungsvariante des Lagerelementes 5 kann vorgesehen sein, dass das Verbindungselement 10 ein Axialgleitlager bildet. Dazu kann das Verbindungselement 10 selbst aus einem für Gleitschichten eines Gleitlagers bekannten Werkstoff gebildet sein. Es ist aber nach einer weiteren Ausführungsvariante auch möglich, dass das Verbindungselement 10 zur Ausbildung des Axialgleitlagers eine Beschichtung 21 aus einem Gleitlagerwerkstoff, z.B. einem Gleitlack, aufweist. Gegebenenfalls kann in diesem Fall auch die Gleitschicht des Gleitlagerelements einstückig mit der Beschichtung 21 ausgebildet sein.

Die Ausführungsbeispiele zeigen bzw. beschreiben mögliche Ausführungsvarianten des Lagerelementes 5 bzw. der Lageranordnung 1, wobei an dieser Stelle bemerkt sei, dass auch Kombinationen der einzelnen Ausführungsvarianten untereinander möglich sind, wie in den anliegenden Ansprüchen definiert.

Der Ordnung halber sei abschließend darauf hingewiesen, dass zum besseren Verständnis des Aufbaus das Lagerelement 5 bzw. die Lageranordnung 1 nicht zwingenderweise maßstäblich dargestellt sind.

### Bezugszeichenaufstellung

- 1: Lageranordnung
- 2: Pleuelstange
- 3: Pleuelauge
- 4: Pleuelauge
- 5: Lagerelement
- 6: Lagerelementkörper
- 7: Lageraufnahme
- 8: Sensor
- 9: Telemetrie-Vorrichtung
- 10: Verbindungselement
- 11: Schweißnaht
- 12: Schenkel
- 13: Schenkel
- 14: Basis
- 15: Ausnehmung
- 16: Pleuelschaft
- 17: Vertiefung
- 18: Leiter
- 19: Energieerzeugungsvorrichtung
- 20: Ausnehmung
- 21: Beschichtung

## Patentansprüche

1. Lagerelement (5) zur Anordnung in einer Lageraufnahme (7) einer Lageranordnung (1) umfassend einen als Gleitlagerelement ausgebildeten Lagerelementkörper (6) und einen Sensor (8) zur Messung zumindest eines Betriebsparameters des Lagerelements (5), sowie eine Telemetrie-Vorrichtung (9), wobei der Lagerelementkörper (6) mit der Telemetrie-Vorrichtung (9) mit einem Verbindungselement (10) verbunden ist, wobei die Telemetrie-Vorrichtung (9) mit dem Sensor (8) mit elektrischen Leitern (18) leitungsgebunden verbunden ist, **dadurch gekennzeichnet, dass** das Verbindungselement (10) streifenförmig oder bügelförmig ausgebildet ist und dass die elektrischen Leiter (18) auf dem Verbindungselement (10) angeordnet sind.

2. Lagerelement (5) nach Anspruch 1, **dadurch gekennzeichnet, dass** das bügelförmige Verbindungselement (10) u-förmig mit zwei Schenkeln (12, 13) ausgebildet ist, wobei beide Schenkel (12, 13) mit dem Lagerelementkörper (6) verbunden sind.

3. Lagerelement (5) nach Anspruch 1 oder 2, **dadurch gekennzeichnet, dass** die elektrischen Leiter (18) durch Leiterbahnen bereitgestellt sind, die auf dem Verbindungselement (10) ausgebildet sind.

4. Lagerelement (5) nach Anspruch 3, **dadurch gekennzeichnet, dass** die Leiterbahnen mit einer Schutzschicht abgedeckt sind.

5. Lagerelement (5) nach einem der Ansprüche 1 bis 4, **dadurch gekennzeichnet, dass** zusätzlich eine Energieversorgungsvorrichtung (19) vorgesehen ist, die elektrische leitend mit der Telemetrie-Vorrichtung (9) und dem Sensor (8) verbunden ist.

6. Lagerelement (5) nach Anspruch 5, **dadurch gekennzeichnet, dass** die elektrische leitende Verbindung der Energieversorgungsvorrichtung (19) mit dem Sensor (8) über weitere elektrische Leiter ausgebildet ist, wobei die weiteren elektrischen Leiter auf dem Verbindungselement (10) angeordnet sind.

7. Lagerelement (5) nach einem der Ansprüche 1 bis 6, **dadurch gekennzeichnet, dass** das Verbindungselement (10) ein Axialgleitlager bildet.

8. Lagerelement (5) nach Anspruch 7, **dadurch gekennzeichnet, dass** das Verbindungselement (10) zur Ausbildung des Axialgleitlagers mit einem Gleitlagerwerkstoff beschichtet ist.

9. Lagerelement (5) nach einem der Ansprüche 1 bis 8, **dadurch gekennzeichnet, dass** der Lagerelementkörper (6) eine Ausnehmung (20) aufweist, und dass der Sensor (8) in dieser Ausnehmung (20) angeordnet ist.

10. Lageranordnung (1) mit einer Lageraufnahme (7) und zumindest einem Lagerelement (5), das in der Lageraufnahme (7) angeordnet ist, **dadurch gekennzeichnet, dass** das Lagerelement (5) entsprechend einem der Ansprüche 1 bis 9 ausgebildet ist.

11. Lageranordnung (1) nach Anspruch 10, **dadurch gekennzeichnet, dass** die Lageraufnahme (7) als Pleuelstange (2) ausgebildet ist.

12. Lageranordnung (1) nach Anspruch 10 oder 11, **dadurch gekennzeichnet, dass** die Lageraufnahme (7) eine Vertiefung (17) aufweist, in der das Verbindungselement (10) des Lagerelementes (5) zumindest teilweise aufgenommen ist.

## Claims

1. A bearing element (5) for being arranged in a bearing receptacle (7) of a bearing assembly (1) comprising a bearing element body (6) embodied as a sliding bearing element and a sensor (8) for measuring at least one operating parameter of the bearing element (5), as well as a telemetry device (9), wherein the bearing element body (6) is connected to the telemetry device (9) by means of a connecting element (10), wherein the telemetry device (9) is line-connected to the sensor (8) by means of electric conductors (18), **characterized in that** the connecting element (10) has a strip-shaped or bow-shaped design and that the electric conductors (18) are arranged on the connecting element (10).

2. The bearing element (5) according to claim 1, **characterized in that** the bow-shaped connecting element (10) is designed to be U-shaped having two legs (12, 13), wherein both legs (12, 13) are connected to the bearing element body (6).

3. The bearing element (5) according to claim 1 or 2, **characterized in that** the electric conductors (18) are provided by means of conducting paths, which are formed on the connecting element (10).

4. The bearing element (5) according to claim 3, **characterized in that** the conducting paths are covered with a protective layer.

5. The bearing element (5) according to one of claims 1 to 4, **characterized in that** additionally, an energy supply device (19) is provided, which is connected, in an electrically conductive manner, to the telemetry device (9) and the sensor (8).

6. The bearing element (5) according to claim 5, **characterized in that** the electrically conductive connection of the energy supply device (19) and the sensor (8) is formed via further electric conductors, wherein the further electric conductors are arranged on the connecting element (10).

7. The bearing element (5) according to one of claims 1 to 6, **characterized in that** the connecting element (10) forms an axial sliding bearing.

8. The bearing element (5) according to claim 7, **characterized in that** the connecting element (10) is coated with a sliding bearing material in order to form the axial sliding bearing.

9. The bearing element (5) according to one of claims 1 to 8, **characterized in that** the bearing element body (6) has a recess (20), and that the sensor (8) is arranged in said recess (20).

10. A bearing assembly (1) with a bearing receptacle (7) and at least one bearing element (5), which is arranged in the bearing receptacle (7), **characterized in that** the bearing element (5) is formed according to one of claims 1 to 9.

11. The bearing assembly (1) according to claim 10, **characterized in that** the bearing receptacle (7) is formed as a connecting rod (2).

12. The bearing assembly (1) according to claim 10 or 11, **characterized in that** the bearing receptacle (7) has an indentation (17), in which the connecting element (10) of the bearing element (5) is at least partially accommodated.

## Revendications

1. Élément de palier (5) à agencer dans un logement de palier (7) d'un agencement de palier (1) comprenant un corps d'élément de palier (6) réalisé sous forme d'un élément de palier lisse et un capteur (8) permettant de mesurer au moins un paramètre de fonctionnement de l'élément de palier (5), ainsi qu'un dispositif de télémétrie (9), dans lequel le corps d'élément de palier (6) est relié au dispositif de télémétrie (9) par un élément de liaison (10), dans lequel le dispositif de télémétrie (9) est relié de manière conductrice au capteur (8) par des conducteurs électriques (18), **caractérisé en ce que** l'élément de liaison (10) est réalisé en forme de bande ou en forme d'étrier et **en ce que** les conducteurs électriques (18) sont agencés sur l'élément de liaison (10).

2. Élément de palier (5) selon la revendication 1, **caractérisé en ce que** l'élément de liaison en forme d'étrier (10) est réalisé en forme de U avec deux branches (12, 13), dans lequel les deux branches (12, 13) sont reliées au corps d'élément de palier (6).

3. Élément de palier (5) selon la revendication 1 ou 2, **caractérisé en ce que** les conducteurs électriques (18) sont fournis grâce à des pistes conductrices formées sur l'élément de liaison (10).

4. Élément de palier (5) selon la revendication 3, **caractérisé en ce que** les pistes conductrices sont recouvertes d'une couche de protection.

5. Élément de palier (5) selon l'une quelconque des revendications 1 à 4, **caractérisé en ce qu'**un dispositif d'alimentation en énergie (19) relié de manière électriquement conductrice au dispositif de télémétrie (9) et au capteur (8) est en outre prévu.

6. Élément de palier (5) selon la revendication 5, **caractérisé en ce que** la liaison électriquement conductrice du dispositif d'alimentation en énergie (19) avec le capteur (8) est réalisée par l'intermédiaire de conducteurs électriques supplémentaires, les conducteurs électriques supplémentaires étant agencés sur l'élément de liaison (10).

7. Élément de palier (5) selon l'une quelconque des revendications 1 à 6, **caractérisé en ce que** l'élément de liaison (10) forme un palier lisse axial.

8. Élément de palier (5) selon la revendication 7, **caractérisé en ce que** l'élément de liaison (10) est revêtu d'un matériau de palier lisse afin de former le palier lisse axial.

9. Élément de palier (5) selon l'une quelconque des revendications 1 à 8, **caractérisé en ce que** le corps d'élément de palier (6) présente un évidement (20) et **en ce que** le capteur (8) est agencé dans ledit évidement (20).

10. Agencement de palier (1) comprenant un logement de palier (7) et au moins un élément de palier (5) agencé dans le logement de palier (7), **caractérisé en ce que** l'élément de palier (5) est réalisé selon l'une quelconque des revendications 1 à 9.

11. Agencement de palier (1) selon la revendication 10, **caractérisé en ce que** le logement de palier (7) est réalisé sous forme de bielle (2).

12. Agencement de palier (1) selon la revendication 10 ou 11, **caractérisé en ce que** le logement de palier (7) présente un renfoncement (17) au sein duquel l'élément de liaison (10) de l'élément de palier (5) est accueilli au moins partiellement.
